# FASCICULE DE BREVET EUROPEEN

(11) **EP 2 756 338 B1**
(45) Date de publication et mention de la délivrance du brevet: **22.07.2015**
(21) Numéro de dépôt: 12758481.1
(22) Date de dépôt: 13.09.2012
(51) Int. Cl.: G02B 3/10

(54) **UNITE OPTIQUE, NOTAMMENT POUR VEHICULE AUTOMOBILE**
OPTISCHE EINHEIT, INSBESONDERE FÜR EIN KRAFTFAHRZEUG
OPTICAL UNIT, IN PARTICULAR FOR A MOTOR VEHICLE

(30) Priorité: 13.09.2011 FR 1158116
(43) Date de publication de la demande: 23.07.2014
(73) Titulaire: Valeo Vision, 93012 Bobigny Cedex (FR)
(72) Inventeur: DE LAMBERTERIE, Antoine, F-75019 Paris (FR); DUBOSC, Christophe, F-93250 Villemomble (FR)
(86) Numéro de dépôt international: PCT/EP2012/067897
(87) Numéro de publication internationale: WO 2013/037861

(56) Documents cités:
- FR-A1- 2 814 219
- US-A1- 2010 061 105

## Description

L'invention concerne notamment une unité optique, notamment pour un véhicule automobile.

Dans le domaine de l'industrie automobile, les fonctions de signalisation et d'éclairage, tel qu'un feu de jour (aussi appelé Daytime Running Light ou DRL) ou un indicateur de direction, sont réalisées séparément par des modules optiques distincts.

Pour des raisons d'encombrement et d'aspect visuel, il existe dans l'état de la technique des solutions permettant d'obtenir un seul module optique réalisant deux fonctions photométriques d'éclairage et/ou de signalisation distinctes.

Le document FR A 2 947 325 A1 divulgue un dispositif optique doté d'au moins deux sources lumineuses réalisant chacune une fonction, et d'un guide de lumière disposant d'une face de sortie commune pour les rayons lumineux issus des deux sources.

Un tel guide de lumière nécessite un système de couplage des sources lumineuses qui, outre l'encombrement supplémentaire et la difficulté de production, présente l'inconvénient d'induire des pertes photométriques imnortretes.

La publication FR 2 814 219 A1 divulgue une unité optique particulièrement intéressante.

Il existe donc un besoin pour réaliser une unité optique, qui tout en restant compacte et simple, permet de réaliser deux fonctions photométriques.

L'invention vise notamment à répondre au besoin précité.

L'invention a ainsi pour objet une unité optique, notamment pour un module optique, comportant :
- au moins une première et une deuxième sources lumineuses distantes l'une de l'autre,
- au moins une lentille multifocale convergente, comprenant au moins une face ondulée, la face ondulée comportant au moins trois portions distinctes, deux de ces portions se focalisant sensiblement sur la première source lumineuse et l'autre portion se positionnant entre ces deux portions et se focalisant sensiblement sur la deuxième source lumineuse.

Grâce à l'invention, il est possible de réaliser simplement une unité optique capable de produire deux fonctions photométriques différentes et qui présente un faible encombrement.

Dans un exemple de mise en oeuvre de l'invention, les portions sont jointives entre elles deux à deux.

Le cas échéant, les portions peuvent être jointives par au moins une partie de leur pourtour.

Si on le souhaite, l'ensemble des portions couvre une partie seulement de la face ondulée.

Préférentiellement, l'ensemble des portions couvre l'intégralité de la face ondulée.

Avantageusement, chaque portion s'étend sur toute la hauteur de la face ondulée.

Cette caractéristique permet l'avantage d'étaler latéralement, c'est-à-dire dans le sens de la largeur de la face ondulée, la puissance lumineuse de la lumière traversant la face ondulée.

Les termes largeur et latéral s'entendent parallèlement à un axe contenu dans le plan contenant les axes d'émission des sources lumineuses et perpendiculaire auxdits axes d'émission.

Les termes hauteur et vertical s'entendent parallèlement à un axe perpendiculaire au plan contenant les axes d'émission des sources lumineuses.

Dans un exemple de mise en oeuvre préféré de l'invention, la face ondulée comprend des stries, ces stries étant formées par deux portions successives, ces deux portions successives présentant des focalisations différentes l'une de l'autre.

Le cas échéant, les deux portions d'une strie peuvent être jointives au sommet de la strie.

On appelle porteuse la courbe contenant les sommets de chaque strie de la face ondulée.

Avantageusement, les stries sont agencées pseudo-périodiquement ou périodiquement sur tout le long de la face ondulée.

Par exemple, les stries sont agencées périodiquement, sur tout le long d'une porteuse de la face ondulée.

Ainsi, les portions se focalisant sur la première source lumineuse sont alternées avec les portions se focalisant sur la deuxième source lumineuse.

Dans un exemple de mise en oeuvre de l'invention, les dimensions de deux portions d'une strie sont sensiblement identiques.

En particulier, les dimensions de toutes les portions de la face ondulée sont sensiblement identiques.

Cette caractéristique offre l'avantage de pouvoir produire, à partir de la première source lumineuse, un faisceau lumineux dont l'intensité dans l'axe du faisceau est sensiblement identique à celle d'un faisceau lumineux produit par la deuxième source lumineuse.

En variante, les dimensions des portions se focalisant sur l'une des sources lumineuses sont sensiblement différentes des dimensions des portions se focalisant sur l'autre des sources lumineuses.

Par exemple, les dimensions des portions se focalisant sur la première source lumineuse sont sensiblement égales aux doubles des dimensions des portions se focalisant sur la deuxième source lumineuse.

Le faisceau lumineux produit par l'unité à partir de la première source lumineuse présente donc une intensité lumineuse dans l'axe du faisceau deux fois plus important que celle du faisceau lumineux produit par l'unité à partir de la deuxième source lumineuse.

Dans un exemple de mise en oeuvre de l'invention, la face ondulée est globalement concave.

En variante, la face ondulée est formée par le balayage d'une courbe appelée génératrice le long d'une courbe directrice.

Par exemple, la face ondulée est cylindrique et présente une droite génératrice et une courbe directrice.

Le cas échéant, la directrice de la face ondulée peut être continue et dérivable sur toute sa longueur, notamment ne présente pas de point de rebroussement, de saut ou de marche.

Par exemple, la directrice de la face ondulée est une courbe ondulée, c'est-à-dire une courbe présentant des ondulations, par exemple une courbe alternativement concave et convexe.

Si on le souhaite, l'amplitude d'une ondulation de la directrice est fonction de la distance de cette ondulation à l'une des sources lumineuses, notamment la source lumineuse la plus proche de cette ondulation.

La porteuse de la face ondulée représente ainsi l'ensemble des amplitudes des ondulations de la directrice.

Il est ainsi possible de contrôler l'étalement de l'intensité lumineuse du faisceau lumineux produit par cette source lumineuse en modifiant le profil de cette porteuse.

La porteuse peut présenter une forme d'arc de cercle.

En variante, la porteuse peut présenter une forme d'arc d'ellipse.

Préférentiellement, la porteuse peut présenter une forme d'arc d'hyperbole.

En particulier, l'amplitude des ondulations de la directrice décroît à mesure de l'éloignement des ondulations des sources lumineuses.

En variante, l'amplitude des ondulations de la directrice est globalement constante.

Dans un exemple de réalisation de l'invention, la directrice de la face ondulée est globalement courbe.

En variante, la directrice de la face ondulée est globalement rectiligne.

Avantageusement, les sources lumineuses présentent chacune un axe d'émission et la directrice de la face ondulée est contenue dans un plan parallèle au plan défini par ces axes d'émission.

Le terme point de focalisation d'une portion ci-après s'entend pour tout point de l'espace à partir duquel un rayon lumineux est émis, atteint cette portion de la lentille et est réfracté par la lentille parallèlement à un axe optique prédéterminé de la lentille.

Une portion présente donc une pluralité de points de focalisation répartis dans l'espace, par exemple en ligne focale ou en zone de focalisation.

Dans un exemple de mise en oeuvre de l'invention, au moins une des portions de la lentille se focalise majoritairement sur l'une des sources lumineuses.

C'est-à-dire qu'au moins 50% des points de focalisation de cette portion sont positionnés sur la surface de cette source lumineuse.

Autrement dit, certains points de focalisation de cette portion sont positionnés à l'extérieur de la surface de cette source lumineuse.

Cette caractéristique permet l'avantage d'étaler latéralement la puissance lumineuse de la lumière émise par cette source lumineuse et traversant cette portion et ainsi d'homogénéiser latéralement le faisceau lumineux produit par l'unité optique.

Il est également ainsi possible d'augmenter la portée latérale du faisceau lumineux produit par l'unité optique afin, par exemple lorsque l'unité est montée dans un véhicule automobile, d'augmenter la zone de perceptibilité de ce faisceau lumineux par un observateur placé à l'extérieur du véhicule.

Préférentiellement, la totalité des portions de la lentille se focalisant sur l'une des sources lumineuses se focalise majoritairement sur cette source lumineuse.

Dans un exemple de mise en oeuvre de l'invention, l'au moins une des portions se focalisant majoritairement sur l'une des sources lumineuses ne se focalise pas sur l'autre des sources lumineuses.

C'est-à-dire qu'aucun des points de focalisation de cette portion n'est positionné sur l'autre source lumineuse.

Préférentiellement, la totalité des portions se focalisant majoritairement sur l'une des sources lumineuses ne se focalise pas sur l'autre des sources lumineuses.

Avantageusement, l'au moins une des portions se focalise symétriquement autour du centre de l'une des sources lumineuse.

C'est-à-dire que l'ensemble des points de focalisation de cette portion est positionné symétriquement autour du centre de cette source lumineuse.

Préférentiellement, la totalité des portions se focalisant sur l'une des sources lumineuses se focalise symétriquement autour du centre de cette source lumineuse.

Dans un autre exemple de mise en oeuvre de l'invention, au moins une des portions de la lentille se focalise uniquement sur l'une des sources lumineuse.

C'est-à-dire que la totalité des points de focalisation de cette portion est positionnée sur cette source lumineuse.

Cette caractéristique offre l'avantage de concentrer la quasi-totalité de la puissance lumineuse de la lumière émise par cette source lumineuse et traversant cette portion en direction de l'axe optique de la lentille et ainsi d'optimiser la puissance lumineuse du faisceau lumineux produit par l'unité.

Préférentiellement, la totalité des portions de la lentille se focalisant sur l'une des sources lumineuse se focalise uniquement sur cette source lumineuse.

Dans un exemple de mise en oeuvre de l'invention, la face ondulée est une face d'entrée de la lumière émise par les sources lumineuses dans la lentille.

En variante, la face ondulée est une face de sortie de la lumière émise par les sources lumineuses dans la lentille.

Dans un exemple de mise en oeuvre de l'invention, la lentille comporte une deuxième face, la deuxième face étant une face ondulée telle que décrite ci-dessus.

En variante, la lentille comporte une deuxième face, cette deuxième face est formée par le balayage d'une courbe appelée génératrice le long d'une courbe directrice.

Par exemple, cette deuxième face est cylindrique et présente une droite génératrice et une courbe directrice.

Le cas échéant, la directrice de la deuxième face peut être contenue dans un plan perpendiculaire au plan défini par lés axes d'émission des sources lumineuses.

Cette caractéristique offre l'avantage de pouvoir répartir la puissance lumineuse de la lumière émise par une source lumineuse et traversant la lentille d'une part latéralement grâce à la première face et verticalement grâce à la deuxième face.

En variante encore, la lentille comporte une deuxième face, cette seconde face étant concave.

Dans un exemple de mise en oeuvre de l'invention, les première et deuxième sources lumineuses comportent chacune un élément photoémissif d'une diode électroluminescente différente.

Dans un autre exemple de mise en oeuvre de l'invention, les première et deuxième sources lumineuses comportent un élément photoémissif d'une même diode électroluminescente.

Avantageusement, la première source lumineuse est capable d'émettre de la lumière de couleur blanche.

Le cas échéant, la deuxième source lumineuse peut être capable d'émettre de la lumière de couleur ambre.

L'invention concerne également un module optique, notamment pour un dispositif d'éclairage et/ou de signalisation, comportant au moins une unité optique telle que décrite ci-dessus.

Dans un exemple de réalisation de l'invention, le module comporte au moins deux unités optiques, les faces de sorties de la lumière des unités optiques étant jointives deux à deux.

Si on le souhaite, les deux unités optiques sont venues de matière en une seule pièce.

Le cas échéant, les jonctions entre les faces de sorties de la lumière sont agencées de manière à ce que l'ensemble des faces de sorties de la lumière des unités optiques présente un aspect continu.

L'aspect visuel du module optique, lorsqu'il est monté dans un véhicule, tel qu'il peut être apprécié par un observateur placé à l'extérieur du véhicule est ainsi amélioré.

Avantageusement, le module optique est capable de créer un premier faisceau lumineux à partir des rayons lumineux émis par les premières sources lumineuses, ce premier faisceau réalisant au moins une partie d'une première fonction photométrique réglementaire prédéterminée, notamment la totalité d'une première fonction photométrique prédéterminée.

Par exemple, cette première fonction photométrique réglementaire est un feu de jour, aussi appelée DRL.

Si on le souhaite, le module est capable de créer un deuxième faisceau lumineux à partir des rayons lumineux émis par les deuxièmes sources lumineuses, ce deuxième faisceau réalisant au moins une partie d'une deuxième fonction photométrique réglementaire prédéterminée, notamment la totalité d'une deuxième fonction photométrique prédéterminée.

Par exemple, cette deuxième fonction photométrique réglementaire est un indicateur de direction.

Le module optique est par conséquent capable de produire deux fonctions photométriques : un feu de jour et un indicateur de direction.

L'invention concerne également un dispositif d'éclairage et/ou de signalisation, notamment pour un véhicule automobile, comportant au moins un module tel que décrit ci-dessus.

Dans un exemple de réalisation de l'invention, le dispositif comporte un dispositif d'alimentation électrique des premières et deuxièmes sources lumineuses des modules.

Le cas échéant, le dispositif d'alimentation électrique peut être capable d'alimenter uniquement soit les premières sources lumineuses soit les deuxièmes sources lumineuses suivant la fonction photométrique souhaitée.

Par exemple, l'alimentation des seules premières sources lumineuses correspond à l'émission d'une fonction 'feu de jour', et l'alimentation des seules deuxièmes sources lumineuses correspond à l'émission d'une fonction 'indicateur de direction'.

L'invention concerne également une lentille multifocale convergente, notamment pour une unité optique telle que décrite ci-dessus, cette lentille comprenant au moins une face ondulée, la face ondulée comportant au moins trois portions distinctes, deux de ces portions se focalisant sur une première zone et l'autre portion se positionnant entre ces deux portions et se focalisant sensiblement sur une deuxième zone, les première et deuxième zones étant distinctes ou se recouvrant uniquement partiellement.

L'invention pourra être mieux comprise à la lecture de la description détaillée qui va suivre, d'exemples de mise en oeuvre non limitatifs de l'invention, et à l'examen du dessin annexé, sur lequel :
- la figure 1 illustre, schématiquement et partiellement, en vue de derrière, une unité optique selon un exemple de mise en oeuvre de l'invention,
- la figure 2 représente, schématiquement et partiellement, une section de l'unité optique de la figure 1,
- les figures 3 à 6 représentent, schématiquement et partiellement, une section d'une unité optique selon différents exemples de mise en oeuvre de l'invention,
- les figures 7 à 9 représentent, schématiquement et partiellement, une section d'une unité optique selon différents exemples de mise en oeuvre de l'invention,
- les figures 10 et 11 représentent, schématiquement et partiellement, respectivement en vue de derrière et en vue de face, un module optique selon un exemple de mise en oeuvre de l'invention utilisant plusieurs unités optiques, et
- les figures 12 et 13 représentent, schématiquement et partiellement, un exemple de l'évolution des points de focalisation de la face ondulée le long de la directrice de la lentille.

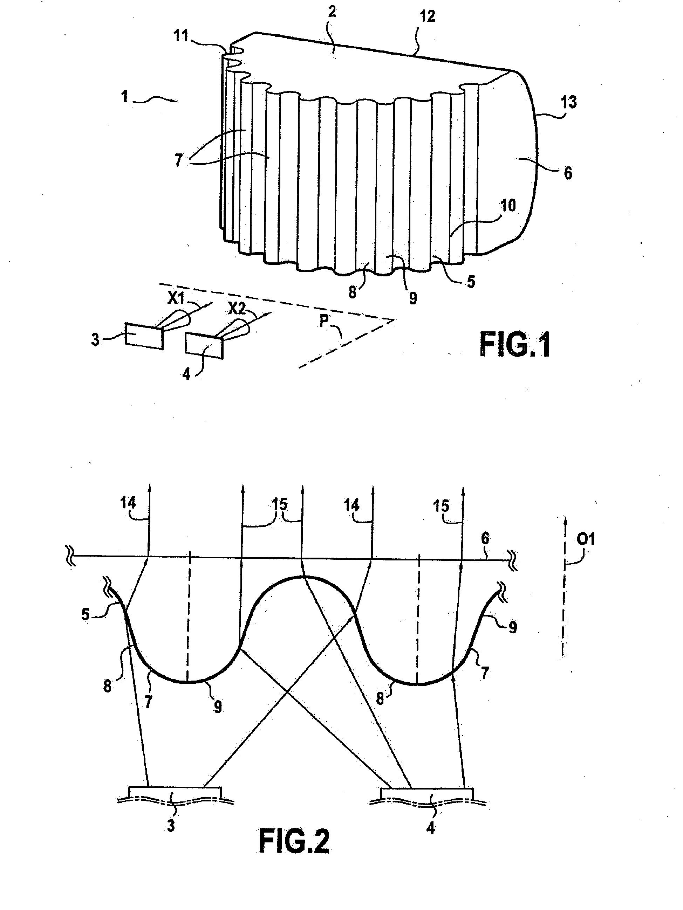

On a représenté sur la figure 1 une unité optique 1 comprenant une lentille 2 et deux diodes électroluminescentes 3 et 4 montées respectivement sur leur carte électronique.

La lentille 2 comporte une face ondulée d'entrée de la lumière 5 et une face de sortie de la lumière 6.

La face ondulée 5 est cylindrique et présente une droite génératrice 10 et une courbe directrice 11.

La directrice 11 est une courbe ondulée contenue dans un plan parallèle au plan P contenant les axes d'émission X1 et X2 respectifs des diodes électroluminescentes 3 et 4.

La directrice 11 est globalement courbée.

Les amplitudes des ondulations de la directrice 11 diminuent à mesure que ces ondulations s'éloignent des diodes 3 et 4.

La face ondulée 5 comprend une pluralité de stries 7 dont le profil correspond à la directrice 11.

Les stries 7 recouvrent la totalité de la face ondulée 5, ces stries 7 étant agencées périodiquement sur tout le long de la face ondulée 5.

Les stries 7 s'étendent sur toute la hauteur de la face ondulée 7.

Chaque strie 7 comporte deux portions 8 et 9, ces portions se joignant au sommet de la strie.

Ce sommet est illustré sur deux stries en lignes pointillées entre les portions 8 et 9. Pour des raisons de clarté, il n'a été représenté que sur deux stries.

Par conséquent, les portions 8 s'alternent avec les portions 9 sur tout le long de la face ondulée 5.

Les portions 8 sont focalisées sur la diode électroluminescente 3 et les portions 9 sont focalisées sur la diode électroluminescente 4.

La face de sortie 6 est cylindrique et présente une droite génératrice 12 et une courbe directrice 13.

La directrice 13 de la face de sortie 6 est contenue dans un plan perpendiculaire au plan P.

Les diodes électroluminescentes 3 et 4 émettent en direction de la lentille 2 respectivement de la lumière de couleur blanche et de la lumière de couleur ambre.

On a représenté sur la figure 2 une partie d'une section par un plan parallèle au plan P de la lentille 2 de la figure 1.

La lentille 2 présente une face d'entrée ondulée 5 présentant des stries 7, une face de sortie de la lumière 6 et un axe optique O1.

Les stries 7 comportent chacune deux portions 8 et 9 se joignant au sommet de la strie.

Les portions 8 sont focalisées sur la diode électroluminescente 3 et les portions 9 sont focalisées sur la diode électroluminescente 4.

Des rayons lumineux 14 de couleur blanche émis par la diode 3 en direction de la lentille 2 atteignent une des portions 8 des stries 7 et sont réfractés successivement par ces portions 8 puis par la face de sortie 6 parallèlement à l'axe optique O1.

Le faisceau lumineux produit par l'unité 2 à partir de ces rayons 14 réalise une partie d'un feu de jour.

Des rayons lumineux 15 de couleur ambre émis par la diode 4 en direction de la lentille 2 atteignent une des portions 9 des stries 7 et sont réfractés successivement par ces portions 9 puis par la face de sortie 6 parallèlement à l'axe optique O1.

Le faisceau lumineux produit par l'unité 2 à partir de ces rayons 15 réalise une partie d'un indicateur de direction.

L'unité 2 est donc capable de produire deux faisceaux présentant une photométrie différente mais selon un même axe optique à partir de deux sources de lumières distinctes.

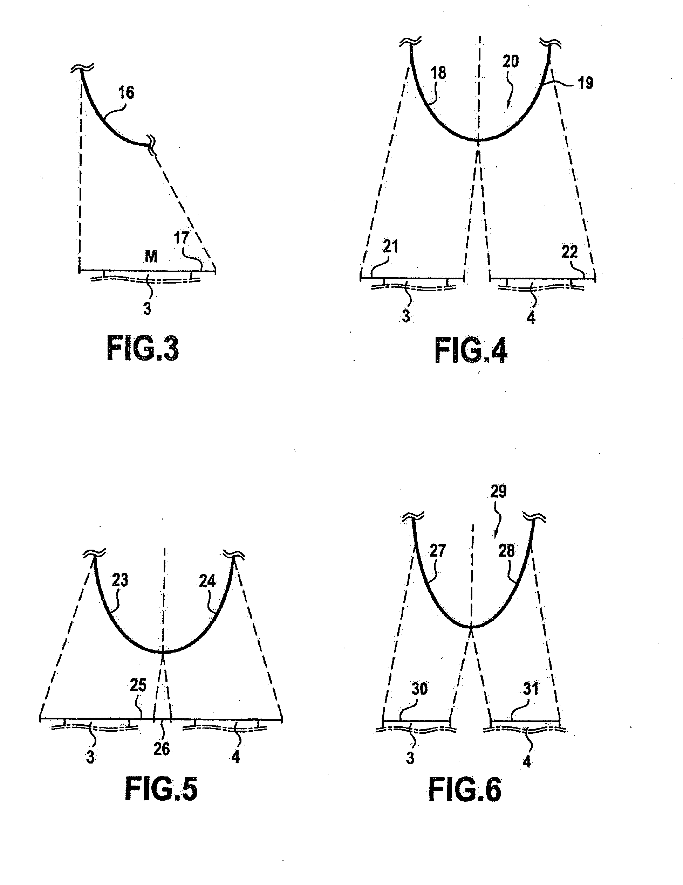

On a représenté sur les figures 3 à 6 d'autres portions de la lentille 2 de la figure 1 selon différents exemples de mise en oeuvre de l'invention.

Sur la figure 3, on a représenté une portion 16 focalisée majoritairement sur la diode électroluminescente 3.

C'est-à-dire qu'au moins 50% de la zone de focalisation 17, représentant l'ensemble des points de focalisation de la portion 16, est positionnée sur la diode électroluminescente 3.

De plus, la portion 16 est focalisée symétriquement autour du centre de la diode électroluminescente 3.

C'est-à-dire que la zone de focalisation 16 s'étend symétriquement de part et d'autre du centre M de la diode 3.

Sur la figure 4, on a représenté deux portions 18 et 19 formant une strie 20.

La portion 18 est focalisée majoritairement sur la diode électroluminescente 3 sans être focalisée sur la diode électroluminescente 4.

La portion 19 est focalisée majoritairement sur la diode électroluminescente 4 sans être focalisée sur la diode électroluminescente 3.

Ainsi, la zone de focalisation 21 de la portion 18 est distante de la diode électroluminescente 4 tandis que la zone de focalisation 22 de la portion 19 est distante de la diode électroluminescente 3.

On a représenté sur la figure 5 deux portions 23 et 24 semblables aux portions 18 et 19 de la figure 4 à l'exception du fait que les zones de focalisations 25 et 26 respectives des portions 23 et 24 se recouvrent entre elles.

On a représenté sur la figure 6 deux portions 27 et 28 d'une strie 29.

La zone de focalisation 30 de la portion 27 est focalisée uniquement sur la diode électroluminescente 3.

La zone de focalisation 31 de la portion 28 est focalisée uniquement sur la diode électroluminescente 4.

Ainsi, la totalité des points de focalisation formant les zones 27 et 28 sont respectivement positionnés sur les diodes électroluminescentes 3 et 4.

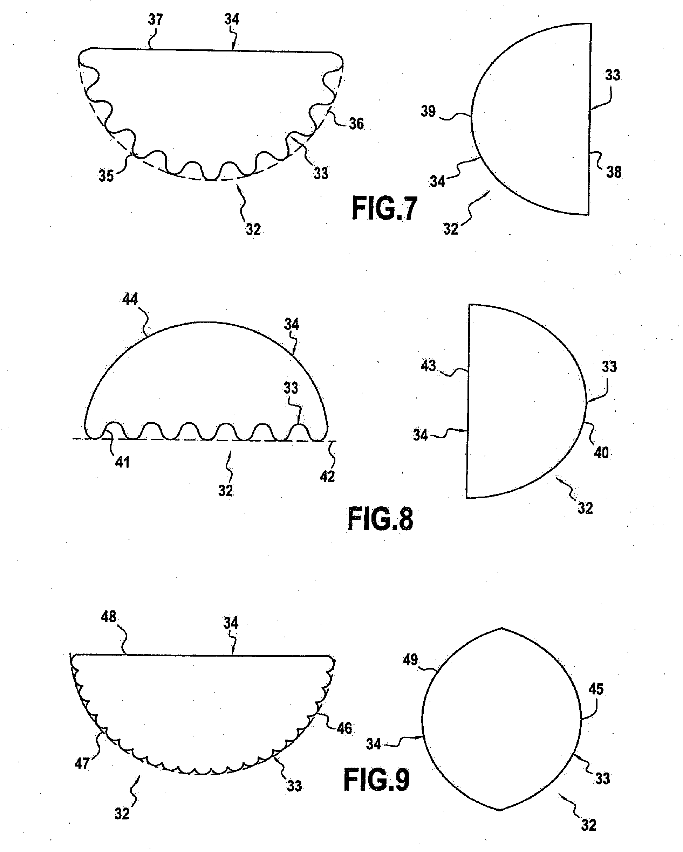

On a représenté sur les figures 7 à 9 deux sections d'une lentille 32 respectivement par un plan P parallèle au plan contenant les axes d'émission des sources lumineuses et par un plan P' perpendiculaire à P selon trois exemples de réalisation.

Sur la figure 7, la lentille 32 comporte une face ondulée d'entrée de la lumière 33 et une face de sortie de la lumière 34.

La face ondulée 33 est cylindrique et est formée par l'extrusion d'une droite génératrice 38 le long d'une courbe appelée directrice 35.

La directrice 35 de la face ondulée 33 présente une forme globalement en arc de cercle. La directrice 35 comporte des ondulations dont l'amplitude est déterminée par une porteuse 36.

Les ondulations de la directrice 35 forment le profil des stries de la lentille 32 lorsque la génératrice 38 est translatée le long de cette directrice 35.

La face de sortie de la lumière 34 est également cylindrique et est formée par l'extrusion d'une droite génératrice 37 le long d'une courbe directrice 39.

La courbe directrice 39 de la face de sortie 34 est une portion d'arc d'ellipse dépourvue d'ondulation de manière à former une face de sortie 34 présentant un profil lisse.

Sur la figure 8, la lentille 32 comporte une face ondulée d'entrée de la lumière 33 et une face de sortie de la lumière 34.

La face ondulée 33 est formée par le balayage d'une courbe génératrice 40 le long d'une courbe directrice 41.

La directrice 41 de la face ondulée 33 est une courbe ondulée globalement courbée.

L'amplitude des ondulations de la directrice 41 est constante et est déterminée par une porteuse 42.

La génératrice 40 de la face ondulée 33 est une portion de cercle dépourvue d'ondulation.

La face de sortie de la lumière 34 est cylindrique et est formée par l'extrusion d'une droite génératrice 43 le long d'une courbe directrice 44.

La directrice 44 de la face de sortie 34 est une portion d'ellipse dépourvue d'ondulation.

Sur la figure 9, la lentille 32 comporte une face ondulée d'entrée de la lumière 33 et une face de sortie de la lumière 34.

La face ondulée 33 est formée par le balayage d'une courbe génératrice 45 le long d'une courbe directrice 46.

La directrice 46 de la face ondulée 33 est une courbe ondulée globalement courbée.

L'amplitude des ondulations de la directrice 46 est déterminée par une porteuse 47, ces ondulations se joignant en des points de rebroussements.

La génératrice 45 est une portion d'ellipse lisse.

La face de sortie de la lumière 34 est cylindrique et est formée par l'extrusion d'une droite génératrice 48 le long d'une courbe directrice 49.

La directrice 49 est une portion d'ellipse dépourvue d'ondulation.

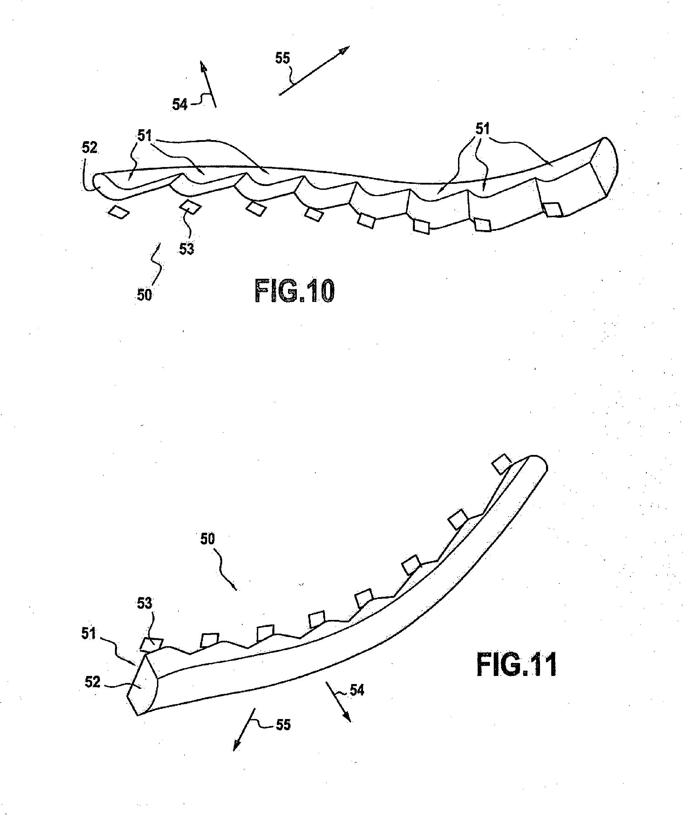

On a représenté sur les figures 10 et 11, en vue de face et de derrière, un module optique 50 selon un mode de réalisation de l'invention.

Ce module optique 50 comporte huit unités optiques 51.

Ces unités optiques 51 comportent chacune une lentille 52, tel que décrite à la figure 1 et deux éléments photoémissifs d'une même diode électroluminescente 53, les lentilles 52 se focalisante alternativement sur ces deux éléments photoémissifs.

L'ensemble 54 des faces de sorties des lentilles 52 présente un aspect visuel continu et lisse.

Le module optique 50 est capable d'émettre, dans la direction 54, un feu de jour, et dans la direction 55, un indicateur de direction.

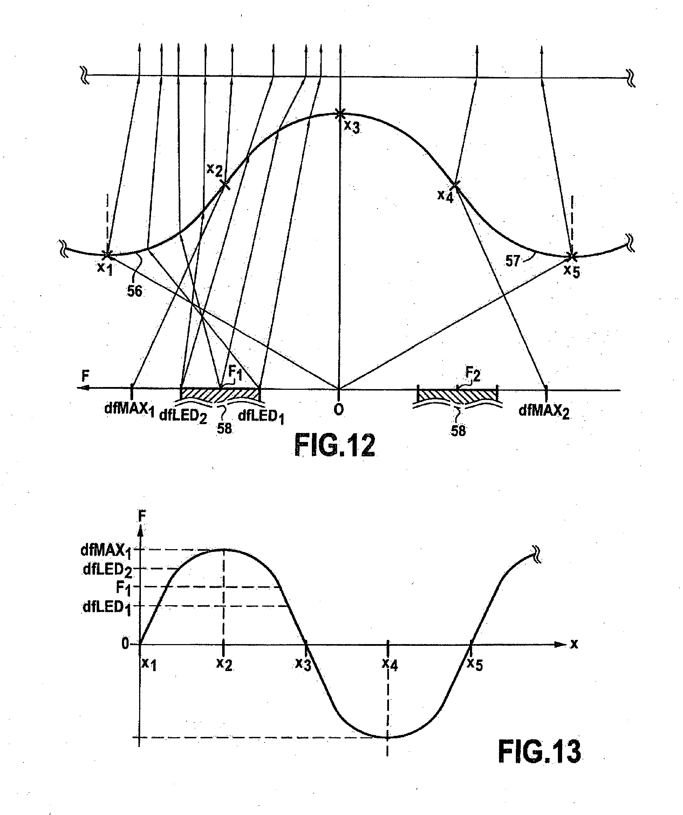

On a représenté sur la figure 12 une partie d'une section dans un plan P de l'unité optique de la figure 1. On observe, sur cette figure 12, deux portions 56 et 57 de la face d'ondulée d'entrée de la lumière de la lentille, une face de sortie de la lumière 59 et deux sources lumineuses 58.

La portion 56 correspond à la pente d'une première strie et la portion 57 correspond à la pente d'une deuxième strie, ces deux stries se joignant en un point d'abscisse x3.

La portion 56 s'étend entre le sommet de la première strie d'abscisse x1 et le point d'abscisse x3.

La portion 56 présente un point d'inflexion d'abscisse x2.

La portion 57 s'étend entre le sommet de la deuxième strie d'abscisse x5 et le point d'abscisse x3.

La portion 57 présente un point d'inflexion d'abscisse x4.

On a représenté sur la figure 13 la courbe 59 du positionnement de points de focalisation, c'est-à-dire les points desquels un rayon lumineux serait émis et serait réfracté par la lentille parallèlement à l'axe optique de la lentille, des portions 56 et 57 sur un axe F passant par les centres F1 et F2 des sources lumineuses 58, en fonction de la position d'un point M le long des portions 56 et 57, plus particulièrement en fonction de l'abscisse x de ce point M.

Tel qu'illustré sur les figures 12 et 13, le point de focalisation du point x1 se situe entre les deux sources de lumières 58, au point d'abscisse O sur l'axe F.

Lorsque le point M évolue sur la portion 56 du point x1 vers le point x2, le point de focalisation se évolue du point O vers le point dFMAX1.

Se faisant, il rencontre successivement un premier bord dFLED1 de la source 58 de centre F1, le centre F1 de la source et un deuxième bord dFLED2 de la source 58 de centre F1.

Lorsque le point M évolue du point x2 vers le point x3, le point de focalisation se évolue du point dFMAX1 vers le point O.

Se faisant, il rencontre successivement le deuxième bord dFLED2 de la source 58 de centre F1, le centre F1 de la source et le premier bord dFLED1 de la source 58 de centre F1.

Lorsque le point M dépasse le point x3, ce point M évolue sur la portion 57 et la focalisation se fait autour de la source 58 de centre F2.

Lorsque le point M évolue sur la portion 57 du point x3 vers le point x4, le point de focalisation se évolue du point O vers le point dFMAX2.

Lorsque le point M évolue sur la portion 57 du point x4 vers le point x5, le point de focalisation se évolue du point dfMAX2 vers le point O.

Lorsque le point M dépasse le point x5, ce point M évolue sur la portion suivante et la focalisation se fait autour de la source 58 de centre F1, de la même manière que décrite plus haut pour la portion 56.

## Revendications

1. Unité optique (1), notamment pour un module optique, comportant :
- au moins une première (3) et une deuxième (4) sources lumineuses distantes l'une de l'autre,
- au moins une lentille multifocale convergente (2), comprenant au moins une face ondulée, la face ondulée (5) comportant au moins trois portions (8,9) distinctes, deux de ces portions (8) se focalisant sensiblement sur la première source lumineuse (3) et l'autre portion (9) se positionnant entre ces deux portions (8) et se focalisant sensiblement sur la deuxième source lumineuse (4).

2. Unité optique selon la revendication précédente, **caractérisée en ce que** les portions (8,9) sont jointives entre elles deux à deux, notamment jointives par au moins une partie de leur pourtour.

3. Unité optique selon l'une des revendications précédentes, **caractérisée en ce que** l'ensemble des portions (8,9) couvre l'intégralité de la face ondulée (5).

4. Unité optique selon l'une des revendications précédentes, **caractérisée en ce que** la face ondulée (5) comprend des stries (7), ces stries étant formées par deux portions (8,9) successives, ces deux portions successives présentant des focalisations différentes l'une de l'autre.

5. Unité optique selon l'une des revendications précédentes, **caractérisée en ce que** les portions se focalisant sur la première source lumineuse (3) sont alternées avec les portions se focalisant sur la deuxième source lumineuse (4).

6. Unité optique selon l'une des revendications précédentes, **caractérisée en ce que** la face ondulée (5) est formée par le balayage d'une courbe génératrice (10) le long d'une courbe directrice (11).

7. Unité selon la revendication précédente, **caractérisée en ce que** les sources lumineuses (3,4) présentent chacune un axe d'émission (X1,X2) et **en ce que** la directrice (11) de la face ondulée (5) est contenue dans un plan parallèle au plan (P) défini par ces axes d'émission (X1,X2).

8. Unité selon l'une des revendications précédentes, **caractérisée en ce que** la face ondulée (5) est une face d'entrée de la lumière émise par les sources lumineuses (3,4) dans la lentille (2).

9. Unité selon l'une des revendications précédentes, **caractérisée en ce que** la lentille (2) comporte une deuxième face (6), cette deuxième face (6) étant formée par le balayage d'une courbe génératrice (12) le long d'une courbe directrice (13).

10. Unité selon la revendication précédente, **caractérisée en ce que** la directrice (13) de la seconde face (6) est contenue dans un plan perpendiculaire au plan (P) défini par les axes d'émission des sources lumineuses (3,4).

11. Module optique, notamment pour un dispositif d'éclairage et/ou de signalisation, comportant au moins une unité optique (1) selon l'une des revendications précédentes.

12. Module optique selon la revendication précédente, **caractérisé en ce qu'**il comporte au moins deux unités optiques (1), les faces de sorties (6) de la lumière des unités optiques (1) étant jointives deux à deux.

13. Module selon l'une des revendications 11 à 12, **caractérisé en ce que** l'ensemble des faces de sorties (6) de la lumière des unités optiques (1) présente un aspect continu.

14. Module optique selon l'une des revendications 11 à 13, **caractérisé en ce qu'**il est capable de créer un premier faisceau lumineux à partir des rayons lumineux émis par les premières sources lumineuses, ce premier faisceau réalisant au moins une partie d'une première fonction photométrique réglementaire prédéterminée, notamment la totalité d'une première fonction photométrique prédéterminée.

15. Module optique selon la revendication précédente, **caractérisé en ce qu'**il est capable de créer un deuxième faisceau lumineux à partir des rayons lumineux émis par les deuxièmes sources lumineuses, ce deuxième faisceau réalisant au moins une partie d'une deuxième fonction photométrique réglementaire prédéterminée, notamment la totalité d'une deuxième fonction photométrique prédéterminée.

16. Dispositif d'éclairage et/ou de signalisation, notamment pour un véhicule automobile, comportant au moins un module optique (50) selon l'une des revendications 11 à 15.

17. Lentille multifocale convergente, notamment pour une unité optique selon l'une des revendications 1 à 10, **caractérisée en ce qu'**elle comprend au moins une face ondulée (5), la face ondulée comportant au moins trois portions distinctes (8,9), deux de ces portions (8) se focalisant sur une première zone et l'autre portion (9) se positionnant entre ces deux portions (8) et se focalisant sensiblement sur une deuxième zone, les première et deuxième zones étant distinctes ou se recouvrant uniquement partiellement.

## Patentansprüche

1. Optikeinheit (1), insbesondere für ein Optikmodul, mit:
- wenigstens einer ersten (3) und einer zweiten (4) Lichtquelle, die voneinander beabstandet sind,
- wenigstens einer multifokalen Sammellinse (2), die wenigstens eine wellenförmige Fläche hat, wobei die wellenförmige Fläche (5) wenigstens drei separate Abschnitte (8, 9) aufweist, wobei zwei der Abschnitte (8) im Wesentlichen auf die erste Lichtquelle (3) fokussiert sind und der andere Abschnitt (9) zwischen diesen beiden Abschnitten (8) positioniert ist und im Wesentlichen auf die zweite Lichtquelle (4) fokussiert ist.

2. Optikeinheit nach dem vorhergehenden Anspruch,
**dadurch gekennzeichnet, dass** die Abschnitte (8, 9) paarweise aneinanderstoßen, insbesondere an wenigstens einem Teil ihres Umfangs.

3. Optikeinheit nach einem der vorhergehenden Ansprüche,
**dadurch gekennzeichnet, dass** alle Abschnitte (8, 9) zusammen die gesamte wellenförmige Fläche (5) bedecken.

4. Optikeinheit nach einem der vorhergehenden Ansprüche,
**dadurch gekennzeichnet, dass** die wellenförmige Fläche (5) Rippen (7) aufweist, wobei diese Rippen durch zwei aufeinanderfolgende Abschnitte (8, 9) gebildet sind, wobei diese beiden aufeinanderfolgenden Abschnitte voneinander verschiedene Fokussierungen aufweisen.

5. Optikeinheit nach einem der vorhergehenden Ansprüche,
**dadurch gekennzeichnet, dass** die auf die erste Lichtquelle (3) fokussierten Abschnitte sich mit den auf die zweite Lichtquelle (4) fokussierten Abschnitten abwechseln.

6. Optikeinheit nach einem der vorhergehenden Ansprüche,
**dadurch gekennzeichnet, dass** die wellenförmige Fläche (5) durch das Abtasten einer Erzeugenden (10) entlang einer Leitlinie (11) gebildet ist.

7. Einheit nach dem vorhergehenden Anspruch,
**dadurch gekennzeichnet, dass** die Lichtquellen (3, 4) jeweils eine Emissionsachse (X1, X2) aufweisen und dass die Leitlinie (11) der wellenförmigen Fläche (5) in einer Ebene enthalten ist, die zu der durch diese Emissionsachsen (X1, X2) bestimmten Ebene (P) parallel ist.

8. Einheit nach einem der vorhergehenden Ansprüche,
**dadurch gekennzeichnet, dass** die wellenförmige Fläche (5) eine Eintrittsfläche für das von den Lichtquellen (3, 4) in die Linse (2) emittierte Licht ist.

9. Einheit nach einem der vorhergehenden Ansprüche,
**dadurch gekennzeichnet, dass** die Linse (2) eine zweite Fläche (6) aufweist, wobei die zweite Fläche (6) durch das Abtasten einer Erzeugenden (12) entlang einer Leitlinie (13) gebildet ist.

10. Einheit nach dem vorhergehenden Anspruch,
**dadurch gekennzeichnet, dass** die Leitlinie (13) der zweiten Fläche (6) in einer Ebene enthalten ist, die zu der durch die Emissionsachsen der Lichtquellen (3, 4) bestimmten Ebene (P) senkrecht ist.

11. Optikmodul, insbesondere für eine Beleuchtungs- und/oder Signalgebungsvorrichtung, mit wenigstens einer Optikeinheit (1) nach einem der vorhergehenden Ansprüche.

12. Optikmodul nach dem vorhergehenden Anspruch,
**dadurch gekennzeichnet, dass** es wenigstens zwei Optikeinheiten (1) umfasst, wobei die Lichtaustrittsflächen (6) der Optikeinheiten (1) paarweise aneinanderstoßen.

13. Modul nach einem der Ansprüche 11 bis 12,
**dadurch gekennzeichnet, dass** die Gesamtheit der Lichtaustrittsflächen (6) der Optikeinheiten (1) ein kontinuierliches Erscheinungsbild bietet.

14. Optikmodul nach einem der Ansprüche 11 bis 13,
**dadurch gekennzeichnet, dass** es ein erstes Lichtbündel mittels der von den ersten Lichtquellen emittierten Lichtstrahlen zu erzeugen vermag, wobei dieses erste Lichtbündel wenigstens einen Teil einer ersten festgelegten vorschriftsmäßigen Lichtverteilungsfunktion realisiert, insbesondere eine gesamte erste festgelegte Lichtverteilungsfunktion.

15. Optikmodul nach dem vorhergehenden Anspruch,
**dadurch gekennzeichnet, dass** es ein zweites Lichtbündel mittels der von den zweiten Lichtquellen emittierten Lichtstrahlen zu erzeugen vermag, wobei dieses zweite Lichtbündel wenigstens einen Teil einer zweiten festgelegten vorschriftsmäßigen Lichtverteilungsfunktion realisiert, insbesondere eine gesamte zweite festgelegte Lichtverteilungsfunktion.

16. Beleuchtungs- und/oder Signalgebungsvorrichtung, insbesondere für ein Kraftfahrzeug, mit wenigstens einem Optikmodul (50) nach einem der Ansprüche 11 bis 15.

17. Multifokale Sammellinse insbesondere für eine Optikeinheit nach einem der Ansprüche 1 bis 10,
**dadurch gekennzeichnet, dass** sie wenigstens eine wellenförmige Fläche (5) hat, wobei die wellenförmige Fläche wenigstens drei separate Abschnitte (8, 9) aufweist, wobei zwei der Abschnitte (8) auf einen ersten Bereich fokussiert sind und der andere Abschnitt (9) zwischen diesen beiden Abschnitten (8) positioniert ist und im Wesentlichen auf einen zweiten Bereich fokussiert ist, wobei der erste und der zweite Bereich voneinander getrennt sind oder sich nur teilweise überlagern.

## Claims

1. Optical unit (1), in particular for an optical module, comprising:
- at least one first (3) and one second (4) mutually distant luminous sources,
- at least one convergent multifocal lens (2), comprising at least one undulated face, said undulated face (5) comprising at least three distinct portions (8, 9), two of these portions (8) being focused substantially on said first light source (3) and the other portion (9) being positioned between these two portions (8) and being focused substantially on said second luminous source (4).

2. Optical unit according to the above claim, **characterized in that** said portions (8, 9) are mutually adjoining pairwise, in particular adjoining by at least one part of their outline.

3. Optical unit according to any one of the above claims, **characterized in that** said portions (8, 9) together cover the whole of said undulated face (5).

4. Optical unit according to any one of the above claims, **characterized in that** said undulated face (5) comprises striations (7), said striations being formed by two successive portions (8, 9), these two successive portions exhibiting mutually differing focusings.

5. Optical unit according to any one of the above claims, **characterized in that** said portions focused on said first luminous source (3) are alternated with the portions focused on said second luminous source (4).

6. Optical unit according to any one of the above claims, **characterized in that** said undulated face (5) is formed by sweeping a generating curve (10) along a director curve (11).

7. Unit according to the above claim, **characterized in that** said luminous sources (3, 4) each exhibit an emission axis (X1, X2) and **in that** said director curve (11) of said undulated face (5) is contained in a plane parallel to a plane (P) defined by said emission axes (X1, X2).

8. Unit according to any one of the above claims, **characterized in that** said undulated face (5) is an entry face for the light emitted by said luminous sources (3, 4) in said lens (2).

9. Unit according to any one of the above claims, **characterized in that** said lens (2) comprises a second face (6), said second face (6) being formed by sweeping a generating curve (12) along a director curve (13).

10. Unit according to the above claim, **characterized in that** said director curve (13) of said second face (6) is contained in a plane perpendicular to a plane (P) defined by the emission axes of the luminous sources (3, 4).

11. Optical module, in particular for a lighting and/or signaling device, comprising at least one optical unit (1) according to any one of the above claims.

12. Optical module according to the above claim, **characterized in that** it comprises at least two optical units (1), exit faces (6) for egress of the light from said optical units (1) being adjoining pairwise.

13. Optical module according to either of claims 11 to 12, **characterized in that** together the exit faces (6) for egress of the light from said optical units (1) exhibit a continuous appearance.

14. Optical module according to any one of claims 11 to 13, **characterized in that** it is capable of creating a first light beam on the basis of the light rays emitted by said first luminous sources, said first light beam achieving at least one part of a first predetermined regulatory photometric function, in particular the totality of a first predetermined photometric function.

15. Optical module according to the above claim, **characterized in that** it is capable of creating a second light beam on the basis of the light rays emitted by said second luminous sources, said second light beam achieving at least one part of a second predetermined regulatory photometric function, in particular the totality of a second predetermined photometric function.

16. Lighting and/or signaling device, in particular for an automotive vehicle, comprising at least one optical module (50) according to any one of claims 11 to 15.

17. Convergent multifocal lens, in particular for an optical unit according to any one of claims 1 to 10, **characterized in that** it comprises at least one undulated face (5), said undulated face comprising at least three distinct portions (8, 9), two of these portions (8) being focused on a first zone and the other portion (9) being positioned between these two portions (8) and being focused substantially on a second zone, said first and second zones being distinct or overlapping only partially.
